# EUROPEAN PATENT APPLICATION

(11) **EP 2 308 322 A1**
(43) Date of publication of application: **13.04.2011**
(21) Application number: 09773569.0
(22) Date of filing: 03.07.2009
(51) Int. Cl.: A23L 1/237, A23L 1/22

(54) **SALTY TASTE ENHANCER CONTAINING MAGNESIUM GLUTAMATE**

(30) Priority: 04.07.2008 JP 2008175709
(71) Applicant: Ajinomoto Co., Inc., Tokyo 104-8315 (JP)
(72) Inventor: IMADA, Toshifumi, Kawasaki-shi Kanagawa 210-8681 (JP); ISHIDA, Mayumi, Koshigaya-shi Saitama 343-0032 (JP); KAWANO, Rumiko, Koshigaya-shi Saitama 343-0032 (JP); ARAI, Heii, Koshigaya-shi Saitama 343-0032 (JP); SOU, Rirei, Kawasaki-shi Kanagawa 210-8681 (JP); KIMURA, Eiichiro, Kawasaki-shi Kanagawa 210-8681 (JP)
(74) Representative: Fischer, Heinrich
(86) International application number: PCT/JP2009/062191
(87) International publication number: WO 2010/001991

(57) **Abstract**

Provided is a novel salty taste enhancer and a method of enhancing salty taste. The salty taste enhancer of the present invention contains magnesium glutamate. The salty taste enhancer is usable in improving a decrease in the taking ratio of a food or a drink, which contains sodium chloride in a reduced amount, because of the lack of the salty taste thereof.

## Description

### TECHNICAL FIELD

### [CROSS-REFERENCE TO RELATED APPLICATION]

This application is based upon and claims the benefit of the priority of Japanese patent applications No.2008-175709 filed on July 4, 2008, the disclosure of which is incorporated herein in their entirety by reference thereto.
The present invention relates to a salty taste enhancer containing magnesium glutamate and particularly the present invention relates to a salty taste enhancer for improving less tastiness and a decrease in the taking ratio of a food or a drink, which contains sodium chloride in a reduced amount, because of the lack of salty taste of a food or a drink and a method for reducing sodium chloride in a food or a drink using thereof, and others.

### BACKGROUND

Excessive intake of sodium chloride is a cause of high blood pressure and also considered as a cause of cerebral apoplexy and cardiac diseases. It is generally carried out, for preventing these diseases, to reduce an amount of intake of sodium chloride itself or add a substitute for sodium chloride. However, a food containing reduced amount of sodium chloride tastes obscure and has a very low tastiness. In addition, it is reported from a search of an influence of a food containing low amount of sodium chloride on nutrient intake that a food containing low amount of sodium chloride causes a decrease of intake of nutrient such as fat and protein with a decrease of energy intake (see Non-Patent Document 1, for example). A method is known to add sodium glutamate or spices to improve deteriorated tastiness caused by decreasing of sodium chloride (see Non-Patent Document 2, for example). However, the sodium glutamate or spices can broaden tastiness but is not enough for enhancing salty taste itself.

On the other hand, a method is also reported that a part of sodium chloride is replaced with a sodium chloride substitute such as a potassium salt, ammonium salt, basic amino acid or peptide having a salty taste, and the like. For example, a method to reduce a bitter taste of potassium chloride by adding carrageenan with potassium chloride (see Patent Document 1, for example) and a production method of a fermented food containing potassium chloride (see Patent Document 2, for example) are reported. In addition, a material is known that can enhance salty taste of sodium chloride by coexisting therewith although the material itself has no salty taste. For example, a method of adding saturated aliphatic monocarboxylic acid having 3 to 8 carbon atoms with a food or drink, which contains sodium chloride, by the amount of 0.01 to 1 weight % of the weight of the contained sodium chloride is reported (see Patent Document 3, for example).

[Patent Document 1] Japanese Patent Kokai Publication No. JP-P04-262758A
[Patent Document 2] Japanese Patent Kokai Publication No. JP-P2007-289145A
[Patent Document 3] Japanese Patent Kokai Publication No. JP-P05-184326A

[Non-Patent Document 1] Morris, C.D. Effect of dietary sodium restriction on overall nutrient intake, Am. J. Clin. Nutr., Vol. 65, pp.687s-691s(1997)
[Non-Patent Document 2] Japanese Journal of Taste and Smell Research, vol. 13, No. 3, pp447-450 (2007)

### SUMMARY OF THE INVENTION

### PROBLEMS TO BE SOLVED BY THE INVENTION

The entire disclosures of the above Patent Documents 1 to 3 and Non-Patent Documents 1 and 2 are incorporated herein by reference thereto. The following analysis is given by a view of the present invention.
An addition of sodium glutamate can improve tastiness of a food containing reduced amount of sodium chloride by enhancing good taste; however, enhancement of salty taste itself is not enough. On the other hand, since sodium glutamate contains sodium, further salt-reduction may be anticipated by using a glutamate other than a sodium salt. However, although basic tasty characteristics of various glutamates are reported before, a glutamate having a salty taste other than sodium salt is not known until now.

### MEANS TO SOLVE THE PROBLEMS

The inventors have found that magnesium glutamate, although it has no salty taste, has an excellent salty taste enhancing effect by coexisting with sodium chloride and completed the present invention as a result of a vigorous search of salty taste enhancing effects of various glutamates.

According to an aspect of the present invention, there is provided a salty taste enhancer containing magnesium glutamate. The salty taste enhancer can be used for improving a decrease in the taking ratio of a food or a drink containing reduced amount of sodium chloride caused by the lack of salty taste of the food or drink, that is, a decrease in the energy intake caused by the food or drink of reduced sodium chloride.

According to another aspect of the present invention, there is provided a salty taste enhancing method for a food or a drink by adding magnesium glutamate with a food or a drink containing sodium chloride. An amount of the magnesium glutamate added with the food or drink is preferably 1 to 200 weight % relative to a weight of sodium chloride contained in the food or drink. More preferably, it is 5 to 100 weight % of the sodium chloride contained in the food or drink. Still more preferably, it is 10 to 80 weight % of the sodium chloride contained in the food or drink.

According to a different aspect of the present invention, there is provided a salty taste seasoning containing sodium chloride and magnesium glutamate an amount of which is 0.5 to 100 weight % of a weight of the sodium chloride. Preferably an amount of magnesium glutamate is 1 to 100 weight %, or more preferably 5 to 100 weight % of a weight of the sodium chloride. The seasoning may further contain one or more components selected from a group of sodium glutamate, potassium glutamate, calcium glutamate, ammonium glutamate, glutamic acid and tasty component based on (or derived from) nucleic acid.

According to further different aspect of the present invention, there is provided a method for reducing sodium chloride in a food or a drink by substituting a part of sodium chloride contained in a food or a drink with magnesium glutamate. An amount of added magnesium glutamate is preferably 2 to 500 weight % of sodium chloride to be reduced. More preferably, the amount of the magnesium glutamate is 10 to 300 weight % of the sodium chloride and still more preferably, the amount of the magnesium glutamate is 10 to 100 weight % of the sodium chloride.

### EFFECT OF THE INVENSION

The salty taste enhancer of the present invention has an effect to enhance the salty taste of coexisting sodium chloride as well as a good taste of glutamic acid. Thus the tastiness of sodium chloride in a food or a drink containing reduced sodium chloride can be improved and a decrease in an amount of food intake can be prevented. The present invention is thus useful to provide a low sodium chloride diet for a patient who needs restricted diets such as a hypertension patient, a cardiac disease patient or a kidney disease patient, who is restricted in an amount of sodium intake, or a healthy person who takes a low sodium chloride diet for preventing a lifestyle-related disease without lowering energy or other nutrient intake from meal.

### BRIEF DESCRIPTION OF THE DRAWINGS

Fig. 1 shows a result comparing strength of a salty taste of salt-reduced (low sodium chloride) miso soup added with magnesium glutamate,
Fig. 2 shows a result comparing strength of a whole taste of salt-reduced (low sodium chloride) miso soup added with magnesium glutamate, and
Fig. 3 shows a result (intervention test) comparing amount of food intake using reference meal and salt-reduced diet of the same menu in two weeks.

### MODES FOR CARRYING OUT THE INVENTION

The magnesium glutamate used in the present invention is a salt of glutamic acid and magnesium of bivalence metal ion. Generally it is obtained by a reaction of glutamic acid and a magnesium salt such as a magnesium hydroxide. The glutamic acid contains a D-isomer and an L-isomer as optical isomers and the L-isomer is preferable for the present invention because the L-isomer is a component of biological protein. A production method of glutamic acid is not limited and either one obtained by hydrolysis of a natural protein from an animal or plant or obtained by a fermentation method or a chemical synthesis may be available. In particular, a fermentation method using glutamic acid production fungus with molasses as a raw material is preferable from the viewpoint of safety and cost. The magnesium glutamate is also designated as MDG (Magnesium Di-Glutamate) in this Description.

The present invention relates to a salty taste enhancer containing magnesium glutamate, that is, a material that does not taste salty itself but enhances salty taste when coexisting with sodium chloride or usage for food or drink based on such a feature. It can be used for a patient such as a hypertension patient or a cardiac disease patient who is subject to restriction in an amount of sodium chloride intake due to high blood pressure or arteriosclerosis, a patient who needs restricted diets such as a kidney disease patient or a healthy person who takes a low sodium chloride diet for preventing a lifestyle-related disease. More preferably, it is used for improving a decrease in energy intake or other nutrient intake caused by a decrease in the taking ratio of a food or a drink that is induced by continuous taking of low sodium chloride diets.

The method for enhancing salty taste of a food or a drink according to a different aspect of the present invention is **characterized in that** magnesium glutamate is added with a food or a drink that contains sodium chloride. An amount of the added magnesium glutamate is preferably 1 to 200 weight % of a weight of sodium chloride contained in the food or drink, more preferably 5 to 100 weight %, and still more preferably 10 to 80 weight %. A concentration of the salty taste enhancer of the present invention in a food or drink is, although it depends on a concentration of sodium chloride in the food or drink, preferably 0.05 to 2 weight % of a weight of the food or drink and more preferably 0.1 to 1 weight %.

A food or drink to be added with the salty taste enhancer is, for example, seasoning such as a miso, soy sauce, sauce, stock, dressing, mayonnaise, tomato ketchup, or the like, a kind of soup such as a miso soup, broth, clear soup, egg soup, wakame seaweed soup, potage, or the like, a kind of dipping broth or sauce for soba, udon, Chinese noodle, pasta, or the like, cooked-rice food such as a rice porridge, rice gruel, boiled rice soaked with tea, or the like, a livestock processed food such as a ham, sausage, cheese, or the like, a kind of snack food such as a potato chips, Japanese cracker, cookie, or the like, or cooked food such as boiled food, deep-fried food, grilled food, curry, or the like.

A salty taste seasoning according to the present invention contains sodium chloride and magnesium glutamate, and the ratio of the magnesium glutamate to a weight of the sodium chloride is 0.5 to 100 weight %, preferably 1 to 100 weight % and more preferably 5 to 100 weight %. Various kinds of additives suitable for foods or drinks such as an inorganic salt, acid, a kind of amino acid, tasty component based on nucleic acid, sugars, natural seasoning, spice, diluent, and the like may be further contained as necessary. Potassium chloride, magnesium sulfate, or the like as an inorganic salt and a carboxylic acid such as an ascorbic acid, fumaric acid, malic acid, tartaric acid, citric acid, or the like and a salt thereof as an acid may be preferably used. As an amino acid, sodium glutamate, potassium glutamate, calcium glutamate, ammonium glutamate, glutamic acid, or the like is preferably used and they are already in use as a flavor enhancer of foods. Each of them has umami taste (or flavor) from glutamic acid or special taste specific for each cation such as a sour taste from an ammonium salt. Sodium inosinate, sodium gualylate, or the like is used as a tasty component derived from a nucleic acid. Sucrose, glucose, lactose, or the like is used as a sugar.

The method for reducing sodium chloride from a food or a drink according to a different aspect of the present invention is **characterized in that** a part of sodium chloride contained in a food or drink is substituted with magnesium glutamate. An amount of sodium glutamate added to the food or drink to be reduced in sodium chloride content is preferably 2 to 500 weight % of the weight of sodium chloride to be reduced, more preferably 10 to 300 weight % and still more preferably 10 to 100 weight %.

### EXAMPLES

The present invention will be explained in detail with reference to examples; however, the present invention is not limited to these examples.

### [Example 1]

A normal miso soup, a miso soup of reduced sodium chloride (salt-reduced) and a miso soup of reduced sodium chloride added with sodium glutamate or magnesium glutamate were prepared and sensory tests concerning the "tasty strength of salty taste" and "tasty strength of whole miso soup" were performed. The amount of sodium chloride and additives in miso were calculated by a certified nutritionist in the Koshigaya Hospital attached to the medical department of the Juntenndo University and the miso soups were prepared such that sodium chloride concentrations in the salt-reduced miso soups become equal. The components are shown in Table 1.

**(Table 1)**

| Sample | Composition | Relative amount of sodium |
|---|---|---|
| Reference 1 | Broth 120 ml | 1 |
| (normal miso soup) | Miso approx. 7 g | |
| Reference 2 | | 0.7 |
| (30% salt-reduced miso soup) | Broth 120 ml Miso approx. 4.5 g | |
| Reference 3 | Broth 120 ml | 0.7 |
| (salt-reduced miso soup using salt-reduced miso from market) | salt-reduced miso from market approx. 9.5 g | |
| | Broth 120 ml | 0.7 |
| | Miso approx. 4.5 g | |
| Sample 1 | MSG 0.2 g | |
| (MSG+MDG) | MDG 0.4 g | |
| | IMP 15 mg | |
| | GMP 2 mg | |
| | Broth 120 ml | 0.7 |
| Sample 2 | Miso approx. 4.5g | |
| (MDG) | MDG 0.6 g | |
| | IMP 15 mg | |
| | GMP 2 mg | |

| | | |
|---|---|---|
| MSG: sodium glutamate MDG: magnesium glutamate IMP: inosinic acid GMP: guanylic acid | | |

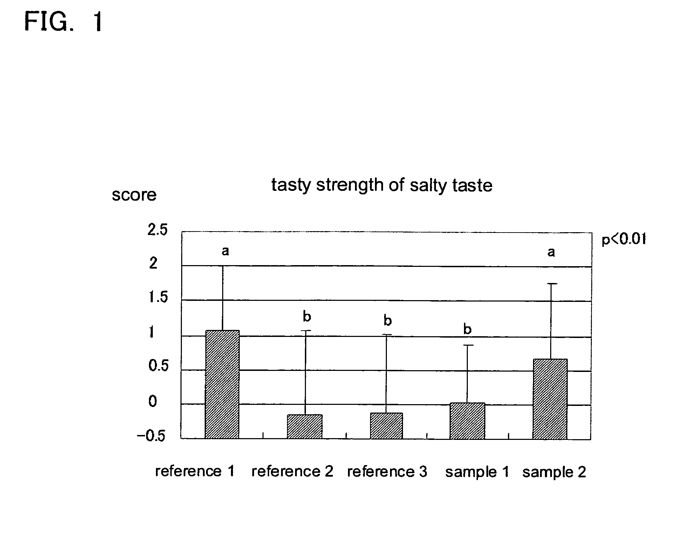

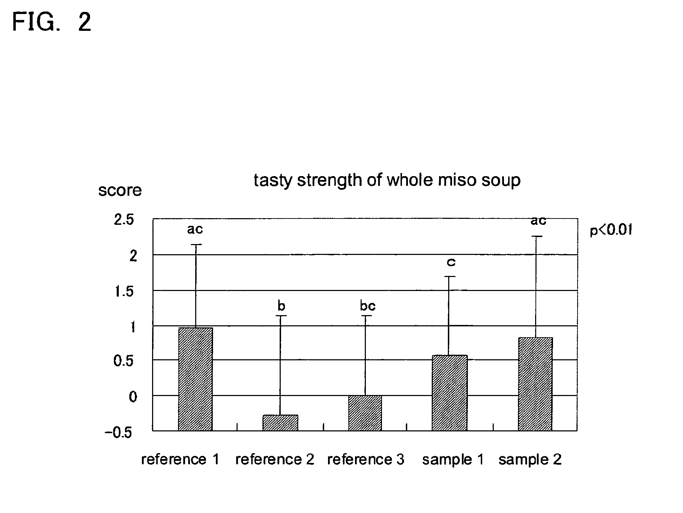

Seven-graded category scale, from -3 to +3, was used as a evaluation method of the "tasty strength of salty taste" and "tasty strength of whole miso soup". The test panel was 28 persons in all of 10 males and 18 females. The results were shown in Fig. 1 (tasty strength of salty taste) and Fig. 2 (tasty strength of whole miso soup). A statistical significant difference was analyzed by a multiple comparison test using the Tukey's HSD test after variance analysis.

As shown in Figs. 1 and 2, the "tasty strength of salty taste" and "tasty strength of whole taste" extremely decreased due to reduction of amount of sodium chloride in 30%; however, it was remarkably improved by addition of MDG (sample 2). The effect was larger than that when added both of the MSG and MDG (sample 1).

### [Example 2]

A sensory evaluation test that was the same as example 1 was performed with experts' panel of six persons of full age (one male and five females) who are in charge of research development in Ajinomoto Co., Inc. to confirm reproducibility of the results of example 1. Sample solutions without broth were prepared according to the composition in Table 2 and tested. The sensory evaluation test results are shown in Table 3. Seven-graded category scale, from 0 to 7, was used as an evaluation method of the "tasty strength of salty taste" and "tasty strength of whole taste".

**(Table 2)**

| Sample | Composition | Converted concentration of sodium chloride (weight) |
|---|---|---|
| Reference 1 | Hot water 440 ml | 0.624% |
| (30% salt-reduced) | Miso 16.39 g Sodium chloride 0.810 g | (2.75 g) |
| | Hot water 440 ml | |
| Reference 2 | Miso 16.39 g | 0.625 % |
| (MSG added) | MSG 2.55 g | |
| | IMP 0.059 g | (2.75 g) |
| | GMP 0.007 g | |
| | Hot water 440 ml | |
| | Miso 16.39 g | |
| | Sodium chloride 0.398 g | 0.625% |
| Sample 1 | MSG 1.274 g | |
| (MSG+MDG) | MDG 1.274 g | (2.75 g) |
| | IMP 0.059 g | |
| | GMP 0.007 g | |
| | Hot water 440 ml | |
| | Miso 16.39 g | |
| Sample 2 | Sodium chloride 0.796 g | 0.624 % |
| (MDG) | MDG 2.549 g | (2.75 g) |
| | IMP 0.059 g | |
| | GMP 0.007 g | |

| | | |
|---|---|---|
| MSG: sodium glutamate MDG: magnesium glutamate IMP: inosinic acid GMP: guanylic acid | | |

**(Table 3)**

| | Reference 1 | Reference 2 | Sample 1 | Sample 2 |
|---|---|---|---|---|
| Strength of salty taste | 3.8 | 3.9 | 4.4 | 4.4 |
| Strength of whole taste | 3.1 | 5.1 | 4.8 | 5.0 |

As shown in Table 3, the strength of salty taste was significantly improved in both cases where the MDG and MSG coexist (sample 1) and only MDG exists (sample 2). Thus it is apparent that the strength of salty taste is improved by adding MDG. The strength of whole taste in the case where only MDG exists (sample 2) was stronger to some degree than the case where the MDG and MSG coexist (sample 1). The reason is that a metal taste from magnesium contributed the strength of the whole taste when only MDG was added. Thus, taking practicality as a seasoning into consideration, it is preferable to add MSG as well as MDG because the metal taste from magnesium can be tempered.

### [Example 3]

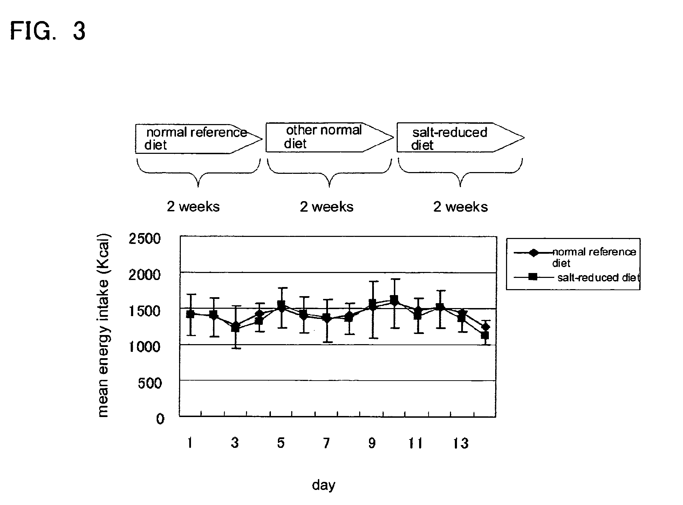

Normal reference diet (sodium chloride: 10 g/day) and 30 % salt-reduced diet (sodium chloride: 7 g/day) of the same menus as the normal reference diet were prepared and made four test subjects ingest each diet in two weeks. At first, the normal reference diets were served in two weeks, an interval of two weeks was left after that (normal diets of different menus were served during that period) and then 30% salt-reduced diets were served in two weeks. Total energy taken by the test subjects in one day were calculated based on the amount of meal left uneaten and the results are shown in Fig. 3.

In Fig. 3, the energy intake in each day is different day by day because each menu is different and each test subject has a different food preference. However, almost no difference of the energy intake was observed between the normal reference diet and 30% salt-reduced diet of the same menu. The results indicates that the food intake of the 30% salt-reduced diet was not changed compared with the normal reference diet and that the energy intake by meal can be maintained even when 30% of sodium chloride was reduced from the meal.

### INDUSTRIAL APPLICABILITY

The salty taste enhancer of the present invention can be used for reducing sodium chloride in foods or drinks without reducing tastiness of the foods or drinks. Thus it is useful for foods or drinks, especially for foods, drinks or seasonings for persons who wish to limit sodium chloride intake.
The disclosures of Patent Documents and References are incorporated herein in their entirety by reference thereto. The modes or examples of the invention can be modified or adjusted within the ambit of the entire disclosures (including the claims) of the present invention, and based on the technical scope of the invention. Moreover, various combinations or selections of the various disclosed elements are possible within the scope of the claims of the present invention.

## Claims

1. A salty taste enhancer comprising magnesium glutamate.

2. The salty taste enhancer according to claim 1, wherein the enhancer is used for improving a decrease in a taking ratio of a food or a drink containing sodium chloride in a reduced amount due to lack of a salty taste thereof.

3. A method of enhancing a salty taste of a food or a drink comprising:
adding magnesium glutamate with a food or a drink containing sodium chloride.

4. The method of enhancing a salty taste according to claim 3, wherein an amount of the added magnesium glutamate is 1 to 200 weight % of an amount of the sodium chloride contained in the food or the drink.

5. A salty taste seasoning comprising sodium chloride and magnesium glutamate by an amount of 0.5 to 100 weight % of an amount of the sodium chloride.

6. The salty taste seasoning according to claim 5, further comprising at least one component selected from a group consisting of sodium glutamate, potassium glutamate, calcium glutamate, ammonium glutamate, glutamic acid and tasty component derived from a nucleic acid.

7. A method to reduce sodium chloride in a food or a drink comprising;
substituting a part of sodium chloride contained in a food or a drink by magnesium glutamate.

8. The method according to claim 7, wherein an amount of the added magnesium glutamate is 2 to 500 weight % of a weight of sodium chloride to be reduced.
